# DEMANDE DE BREVET EUROPEEN

(11) **EP 3 460 297 A1**
(43) Date de publication de la demande: **27.03.2019**
(21) Numéro de dépôt: 18194948.8
(22) Date de dépôt: 17.09.2018
(51) Int. Cl.: F16J 15/3236

(54) **DISPOSITIF D'ETANCHEITE DYNAMIQUE**

(30) Priorité: 21.09.2017 FR 1758755
(71) Demandeur: Euro Techniques Industries, 13420 Gemenos (FR)
(72) Inventeur: MATTONI, Gaëtan, 42123 SAINT-CYR-DE-FAVIERES (FR); BERENGER, Brice, 83400 HYERES (FR)
(74) Mandataire: Santarelli

(57) **Abrégé**

L'invention concerne un dispositif d'étanchéité dynamique configuré pour assurer l'étanchéité entre au moins une première pièce et au moins une deuxième pièce ayant un mouvement relatif de rotation par rapport à la première pièce. Le dispositif comporte un joint pourvu d'une première lèvre et d'une deuxième lèvre s'étendant depuis un talon, la première lèvre étant en regard de la deuxième lèvre, le joint étant formé d'un premier matériau prédéterminé présentant un premier coefficient de frottement, et une bague formée d'un second matériau prédéterminé différent du premier matériau prédéterminé et présentant un second coefficient de frottement différent du premier coefficient de frottement. Selon l'invention, le dispositif est caractérisé en ce que la bague est assujettie solidairement avec le joint au niveau du talon et en ce que le premier coefficient de frottement du premier matériau prédéterminé formant le joint est supérieur au second coefficient de frottement du second matériau prédéterminé formant la bague.

## Description

### DOMAINE DE L'INVENTION

La présente invention concerne les dispositifs d'étanchéité dynamiques configurés pour assurer l'étanchéité entre deux pièces ayant un mouvement relatif de rotation l'une par rapport à l'autre.

### ARRIERE PLAN TECHNOLOGIQUE

Les dispositifs d'étanchéité dynamiques installés dans des équipements sous pression, aussi appelés joints tournants, peuvent trouver une application dans les navires de production pétrolières du domaine de l'offshore, permettant l'exploitation de champs d'hydrocarbures en mer à des profondeurs parfois très importantes. Des unités flottantes de production, de stockage et de déchargement (généralement connus par le terme « Floating Production Storage and Offloading » en anglais ou FPSO) sont en général formées par un navire qui est mobile, du fait de son environnement, autour d'une tourelle d'amarrage qui est géostationnaire. Le navire est généralement assujetti temporairement à la tourelle et des conduits formant un réseau de canalisations subaquatiques permettent une communication fluidique pour le transfert d'un fluide entre la tourelle et le navire.

Pour assurer l'étanchéité entre le navire et la tourelle et ainsi assurer l'intégrité du transfert de fluide, un dispositif d'étanchéité dynamique peut être interposé entre un organe fixe de la tourelle et un organe mobile du navire. Un tel dispositif peut comprendre un ou plusieurs joints ayant une section en forme de U ou V ainsi qu'une ou plusieurs bagues anti-extrusion distincte des joints.

Un tel joint est pourvu d'un talon, de deux lèvres et optionnellement d'un ressort de précontrainte disposé entre les lèvres pour les rappeler en position écartée où elles assurent une fonction d'étanchéité. La bague anti-extrusion est disposée librement contre le talon. Cette bague est prise en sandwich entre l'organe fixe ou l'organe mobile et le talon du joint.

Les lèvres ont pour fonction d'assurer l'étanchéité face au fluide tandis que la fonction du talon est d'assurer l'intégrité mécanique du joint et de résister à la pression du fluide. Un tel talon est souvent massif et contribue à la stabilité géométrique du joint tout en garantissant une résistance à la pression grâce à son inertie mécanique. Le ressort permet quant à lui le remplissage d'une cavité formée entre les lèvres, avec le fluide à transférer ou avec un autre fluide, dit fluide de pressurisation, en maintenant une pression de contact suffisante des lèvres sur les faces des organes contre lesquelles elles viennent en appui de sorte à éviter les fuites. Un tel ressort, optionnel, a souvent pour but d'assurer l'étanchéité à la pression atmosphérique et à faible pression.

En opération, c'est-à-dire lorsque les organes fixes et mobiles sont assujettis mécaniquement l'un avec l'autre et que les dispositifs d'étanchéité sont interposés entre ces organes, au moins l'une des lèvres et/ou le talon sont susceptibles de glisser sur les faces des organes contre lesquels ils sont en appui. Un tel glissement engendre un phénomène de friction sur le joint.

Pour limiter l'usure prématurée du joint face à ce phénomène de friction, il est connu de le réaliser en un polymère de synthèse et en particulier à partir de polytétrafluoroéthylène (PTFE) et de matériaux fluoro polymère équivalents (par exemple le « perfluoroalkoxyalkane » ou PFA, le « polychlorotrifluoroethylene » ou PCTFE, l'éthylène tétrafluoroéthylène ou ETFE) ou de polyuréthane (PU). Dans ce type d'utilisation offshore, les fluoro polymères sont des matériaux appropriés en particulier pour résister aux efforts de friction, notamment du fait de son coefficient de frottement et de sa souplesse.

La bague anti-extrusion est quant à elle réalisée en un matériau plus dur que le joint de sorte à former une barrière entre le talon du joint et la face de l'organe où elle est librement interposée. En particulier, il est connu de réaliser une telle bague à base de polyétheréthercétone (PEEK) pur ou mélangé à des charges.

Cette bague a aussi pour fonction de limiter l'usure prématurée du joint, qui peut être engendrée par un phénomène dit d'extrusion lui-même causé par un effet de fluage du joint lorsque ce dernier est sous charge, c'est-à-dire sous pression, et soumis à une température élevée (notamment du fait du mouvement de rotation de l'organe mobile par rapport à l'organe fixe).

### OBJET DE L'INVENTION

L'invention vise à fournir un dispositif d'étanchéité radiale aux performances améliorées, tant en termes de niveaux de fuite, de résistances à la friction ainsi que de résistance à l'extrusion, dans le but de limiter l'usure prématurée d'un tel dispositif.

L'invention a ainsi pour objet, sous un premier aspect, un dispositif d'étanchéité dynamique configuré pour assurer l'étanchéité entre au moins une première pièce et au moins une deuxième pièce ayant un mouvement relatif de rotation par rapport à la première pièce, le dispositif comportant un joint pourvu d'une première lèvre et d'une deuxième lèvre s'étendant depuis un talon, la première lèvre en regard de la deuxième lèvre, le joint étant formé d'un premier matériau prédéterminé présentant un premier coefficient de frottement et une bague formée d'un second matériau prédéterminé différent du premier matériau prédéterminé et présentant un second coefficient de frottement différent du premier coefficient de frottement ; le dispositif étant caractérisé en ce que la bague est assujettie solidairement avec le joint au niveau du talon et en ce que le premier coefficient de frottement du premier matériau prédéterminé formant le joint est supérieur au second coefficient de frottement du second matériau prédéterminé formant la bague.

Dans le dispositif selon l'invention, la bague du dispositif permet d'assurer un glissement optimisé du talon du joint sur la première pièce et/ou la deuxième pièce ; de sorte que les lèvres du joint ne glissent pas ou peu et donc ne s'usent pas ou peu.

Dans le dispositif selon l'invention, le joint du dispositif permet d'assurer une meilleure résistance à des pressions et/ou à des températures plus élevées que celle du dispositif de l'art antérieur ; tandis que la bague, qui est solidaire du joint et qui permet d'assurer de faibles efforts de friction, est protégée par le joint.

Le premier matériau prédéterminé présente des propriétés mécaniques qui lui permettent de résister mécaniquement à la fois à la pression, à la température et aux sollicitations dynamiques ; tandis que le second matériau prédéterminé présente des propriétés mécaniques qui lui permettent de résister mécaniquement essentiellement aux sollicitations dynamiques.

On notera que le premier matériau prédéterminé présente en outre des propriétés mécaniques différentes du second matériau prédéterminé en ce que ce dernier est plus souple et/ou moins dur que le premier matériau prédéterminé.

La combinaison visant d'une part, à assujettir solidairement la bague avec le joint et d'autre part, à avoir la bague qui présente un coefficient de frottement inférieur au joint et donc qui résiste mieux que le joint notamment aux efforts de friction subis par le dispositif d'étanchéité, permet ainsi de fournir un dispositif d'étanchéité dont la pression de service et/ou la température de service peuvent être étendues, dont le couple de friction généré entre les première et/ou deuxième pièces et le dispositif peut être optimisé, tout en limitant son usure prématurée et par conséquence en augmentant sa durée de vie.

D'autres caractéristiques préférées, simples, commodes et économiques du dispositif d'étanchéité dynamique sont mentionnées ci-après.

Selon un mode de réalisation, le premier matériau prédéterminé est majoritairement réalisé en polyétheréthercétone (PEEK) et le second matériau prédéterminé est majoritairement réalisé en un matériau choisi parmi le polytétrafluoroéthylène (PTFE), le perfluoroalkoxy alkane (PFA), le polychlorotrifluoroéthylène (PCTFE), l'éthylène tétrafluoroéthylène (ETFE), et le polyuréthane (PU).

Selon un mode de réalisation, le joint est annulaire et les première et deuxième lèvres s'étendent chacune depuis le talon dans une direction respective qui est inclinée par rapport à une direction radiale du joint.

Selon un mode de réalisation, le talon et les première et deuxième lèvres sont configurés de sorte que le joint présente, en section, une forme générale en U ou en V.

Selon un mode de réalisation, les première et deuxième lèvres définissent entre elles une cavité du joint et sont en outre chacune pourvues d'un retour dirigée vers la cavité.

Selon un mode de réalisation, le dispositif comporte en outre un ressort de précontrainte logé dans la cavité du joint.

Selon un mode de réalisation, la bague est configurée de sorte à recouvrir entre environ 10% et environ 95% d'une face interne du joint.

Selon un mode de réalisation, la bague est logée à demeure dans le joint.

Selon un mode de réalisation, la bague est logée dans un renfoncement ménagé dans le talon à l'opposé des première et deuxième lèvres.

L'invention a également pour objet, sous un deuxième aspect, un mécanisme d'assujettissement d'au moins une première pièce avec au moins une deuxième pièce ayant un mouvement relatif de rotation par rapport à la première pièce. Le mécanisme comporte un premier organe configuré pour être raccordée à la première pièce, un deuxième organe mobile par rapport au premier organe et configuré pour être raccordée à la deuxième pièce, le premier organe et le deuxième organe étant raccordés l'un avec l'autre pour le transfert d'un fluide depuis l'une des première et deuxième pièces vers l'autre des première et deuxième pièces, ainsi qu'au moins un dispositif d'étanchéité selon le premier aspect de l'invention, disposé dans au moins une gorge ménagée dans le mécanisme au niveau d'une jonction entre le premier organe et le deuxième organe.

Selon un mode de réalisation, le premier organe fait partie d'une tourelle d'amarrage d'une unité flottante de production et le deuxième organe fait partie d'une plateforme s'étendant depuis un navire amarré à la tourelle d'amarrage.

### BREVE DESCRIPTION DES DESSINS

D'autres avantages, buts et caractéristiques de la présente invention ressortent de la description qui suit d'un exemple de réalisation, donnée à titre illustratif et non limitatif, en référence aux dessins annexés sur lesquels :
- la **figure 1** représente schématiquement et partiellement une unité flottante de production comportant un navire et une tourelle, dont la communication fluidique est assurée notamment par un mécanisme d'assujettissement pourvu d'au moins un dispositif d'étanchéité conforme à l'invention ;
- la **figure 2** est une vue en coupe du mécanisme d'assujettissement de la **figure 1****,** montrant plusieurs dispositifs d'étanchéité selon l'invention ;
- la **figure 3** est une vue en coupe d'un dispositif d'étanchéité de la **figure 2** ; et
- la **figure 4** est une vue en perspective du dispositif d'étanchéité de la **figure 3****.**

### DESCRIPTION DETAILLEE D'UN EXEMPLE DE REALISATION

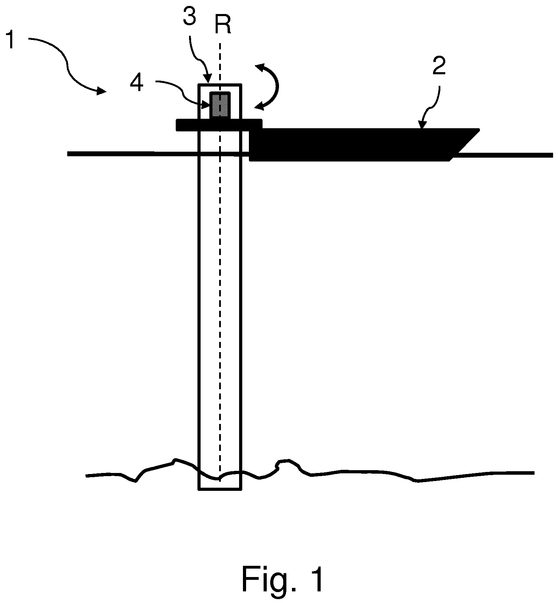

La **figure 1** représente schématiquement et partiellement une unité flottante de production 1, comprenant un navire 2 ainsi qu'une tourelle d'amarrage 3.

La tourelle 3 est ici assujettie mécaniquement à une plateforme s'étendant depuis le navire 2. La tourelle 3 est fixe tandis que le navire 2 peut tourner autour de la tourelle 3. Le navire est donc mobile en rotation autour de l'axe R représentée sur la **figure 1****.** Des conduits (non visibles) formant un réseau de canalisations subaquatiques permettent une communication fluidique pour le transfert d'un fluide entre la tourelle 3 et le navire 2.

Pour assurer l'étanchéité entre le navire 2 et la tourelle 3 et ainsi assurer l'intégrité du transfert de fluide, un mécanisme 4, aussi appelé joint tournant, est interposé entre un organe fixe (aussi appelé premier organe) de la tourelle 3 et un organe mobile (aussi appelé deuxième organe) de la plateforme du navire 2.

Le mécanisme 4 assure l'étanchéité lors d'un transfert de fluide entre la tourelle et la plateforme.

Des communications électroniques peuvent également être assurées entre la tourelle et la plateforme via le mécanisme 4.

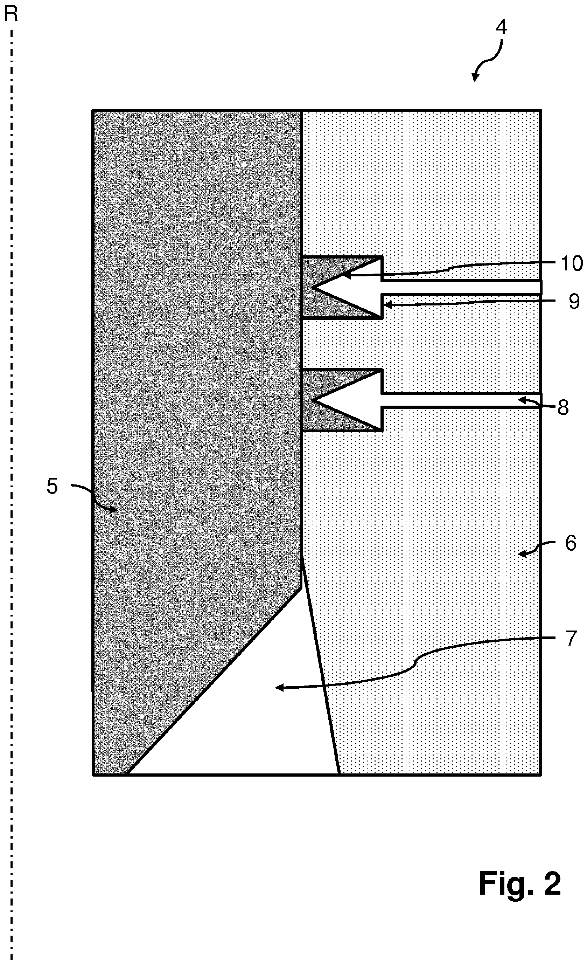

La **figure 2** montre en coupe partielle le mécanisme 4, pourvu de l'organe fixe 5 et de l'organe mobile 6 qui sont ici raccordés l'un avec l'autre pour assurer le transfert du fluide via une cavité principale 7 ménagée entre ces organes 5, 6.

Le mécanisme 4 est pourvu des canaux radiaux 8débouchant sur des gorges 9 aménagées sensiblement au niveau de la jonction entre les organes 5 et 6. Dans au moins certaines de ces gorges 9 peut être logé un dispositif d'étanchéité 10.

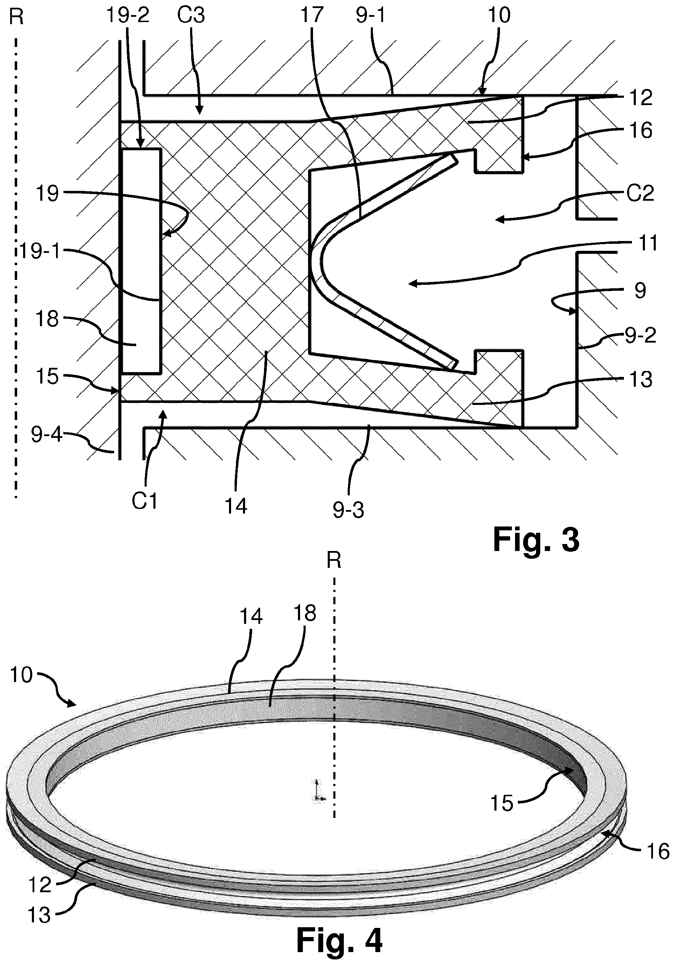

Les **figures 3 et 4** illustrent le dispositif d'étanchéité 10.

Le dispositif d'étanchéité comporte un joint annulaire 11, présentant un axe de révolution R, et pourvu d'une première lèvre 12 et d'une deuxième lèvre 13 s'étendant depuis un talon 14, la première lèvre 12 en regard de la deuxième lèvre 13.

Le dispositif 10 présente une face interne 15, une face externe 16 opposée à la face interne 15 et des parois latérales opposées rejoignant chacune à la fois, la face interne 15 par une première extrémité et la face externe 16 par une deuxième extrémité opposée à la première extrémité.

Le joint 11 est formé d'un premier matériau prédéterminé présentant un premier coefficient de frottement.

Les première et deuxième lèvres 12 et 13 s'étendent chacune depuis le talon 14 dans une direction respective qui est inclinée par rapport à une direction radiale du dispositif 10. Le talon 14 et les lèvres 12, 13 sont ainsi configurés de sorte que le joint 11 présente, en section, une forme générale en V.

Les lèvres 12, 13 définissent entre elles une cavité du joint 11 et sont en outre chacune pourvues, à une extrémité libre respective, d'un retour dirigée vers la cavité du joint 11. On notera que ces retours forment la paroi externe 16 du joint 11.

La cavité du joint 11 présente un fond délimitant le talon 14 à l'opposé de la face interne 15 du joint, ainsi que des côtés s'étendant depuis le fond et formés par des faces intérieures respectives des première et deuxième lèvres 12 et 13.

On notera que les parois latérales du joint 11 sont formées par des faces extérieures respectives des première et deuxième lèvres 12 et 13, opposées à leurs faces intérieures respectives.

Le dispositif peut comporter en outre un ressort de précontrainte 17 logé dans la cavité du joint 11. Ce ressort 17 est ici un ressort lame pourvu de deux branches raccordées l'une à l'autre par une portion de jonction. La portion de jonction du ressort 17 repose sur le fond de la cavité tandis que les branches viennent respectivement en appui contre les faces intérieures des première et deuxième lèvres 12 et 13.

Le dispositif d'étanchéité 10 comporte en outre une bague 18, dite bague antifriction, formée d'un second matériau prédéterminé différent du premier matériau prédéterminé et présentant un second coefficient de frottement différent du premier coefficient de frottement.

La bague 18 est assujettie solidairement avec le joint 11 au niveau du talon 14.

En particulier, la bague 18 est logée à demeure dans le joint 11 et plus précisément dans un renfoncement 19 ménagé dans le talon 14 à l'opposé des première et deuxième lèvres 12 et 13. Le renfoncement 19 est formé dans la face interne 15 du joint 11. Le renfoncement 19 du talon 14 présente un fond 19-1 et une paroi latérale 19-2.

La bague 18 est configurée de sorte à recouvrir entre environ 40% et environ 95% de la face interne 15 du joint 11.

La bague 18 présente une face libre, une face d'appui opposée à la face libre et disposée contre le fond 19-1 du renfoncement 19 formé par le talon 14, et un pourtour disposé contre la paroi latérale 19-2 du renfoncement 19.

Ici, la gorge 9 dans laquelle est introduit le dispositif d'étanchéité 10, est délimitée par une première paroi 9-1 horizontale, une deuxième paroi 9-2 verticale, une troisième paroi 9-3 horizontale qui s'étend en regard de la première paroi 9-1 horizontale, avec la deuxième paroi 9-2 verticale qui s'étend entre et rejoint les première et troisième parois 9-1 et 9-3.

Ces parois 9-1, 9-2 et 9-3 sont ménagées dans l'organe mobile 6.

La gorge 9 dans laquelle est introduit le dispositif d'étanchéité 10 est en outre délimitée par une quatrième paroi 9-4 verticale s'étendant en regard de la deuxième paroi 9-2 verticale et à distance de des première et troisième parois 9-1 et 9-3 horizontales.

Cette quatrième paroi 9-4 est ménagée dans le système et fait ici partie de l'organe mobile 6.

Lorsque le dispositif d'étanchéité 10 est présent dans la gorge (voir **figure 3**), une cavité C1 est formée entre la paroi latérale du joint 11 du côté de la deuxième lèvre 13 et la troisième paroi 9-3 horizontale ; une cavité C2 est formée entre la face externe 16 du dispositif 10 et la deuxième paroi 9-2 verticale, la cavité C2 communiquant avec la cavité du joint 11 ; et une cavité C3 est formée entre la paroi latérale du joint 11 du côté de la première lèvre 12 et la première paroi 9-1 horizontale.

On notera que des conduits de cheminement de fluides sont ménagés dans les première, deuxième et troisième parois 9-1, 9-2 et 9-3 et débouchent dans la gorge 9, respectivement dans les cavités C3, C2 et C1.

On va maintenant décrire la coopération du dispositif d'étanchéité 10 avec les parois 9-1 à 9-4 de la gorge 9.

Les première et deuxième lèvres 12 et 13 sont ici en contact, par leurs faces extérieures, respectivement avec les première et troisième parois 9-1 et 9-3 horizontales.

Le talon 14 est ici en contact, au niveau de la face interne 15 du joint 11, avec la quatrième paroi 9-4 verticale.

La bague 18 est ici en contact, par sa face libre, avec la quatrième paroi 9-4 verticale.

C'est la bague 18 qui vient en majeure partie en appui contre la quatrième paroi 9-4 verticale ; tandis que la majeure partie du talon 14 n'est pas en appui contre cette quatrième paroi 9-4 verticale.

Dans un tel agencement, la bague 18 recouvrant en majeure partie le talon 14 peut glisser contre la quatrième paroi 9-4 verticale qui est mobile ; tandis que les première et deuxième lèvres 12 et 13 ne peuvent pas ou quasiment pas glisser contre les première et troisième parois 9-1 et 9-3 horizontales.

Il s'agit d'un montage dit radial du dispositif d'étanchéité.

On notera que le talon 14 permet la coopération et le maintien des première et deuxième lèvres 12 et 13 avec le reste du joint 11. Le talon 14 est une partie massive qui assure l'intégrité mécanique du joint 11 et lui permet de résister à la pression d'un fluide.

Le ressort 17, généralement en acier, garantit un serrage des première et deuxième lèvres 12 et 13 contre les première et troisième parois 9-1 et 9-3 de la gorge 9, formant les surfaces à étancher.

Le ressort 17 permet en outre le remplissage de la cavité du joint 11 avec un fluide, ici dit de pressurisation, en maintenant une pression de contact suffisante des lèvres sur les parois pour éviter les fuites.

Un fluide de pressurisation est un fluide utilisé pour contre pressuriser le joint 11 afin d'opposer une pression plus forte au fluide principal. La cavité C2 et la cavité du joint 11 sont ici remplies d'un tel fluide de pressurisation, lequel est confiné dans ces cavités par l'action des première et deuxième lèvres 12 et 13.

Au contraire, le fluide principal à transférer est présent dans la cavité 7 du mécanisme 4 à la jonction entre les organes fixe 5 et mobile 6. Le fluide principal est aussi présent dans la cavité C1 de la gorge 9, où la première lèvre 12 forme une barrière pour empêcher le fluide principal de cheminer au-delà vers les cavités C2 et C3.

Au contraire, la cavité C3 de la gorge 9 est ici vide lorsque le joint assure sa fonction d'étanchéité.

Ici, le premier coefficient de frottement du premier matériau prédéterminé formant le joint 11 est supérieur au second coefficient de frottement du second matériau prédéterminé formant la bague 18.

En particulier, le premier matériau prédéterminé est ici majoritairement réalisé en polyétheréthercétone, dit PEEK, et le second matériau prédéterminé est ici majoritairement réalisé en polytétrafluoroéthylène (PTFE) ou à partir de matériaux fluoro polymère équivalents (par exemple le « perfluoroalkoxy alkane » ou PFA, le « polychlorotrifluoroethylene » ou PCTFE, l'éthylène tétrafluoroéthylène ou ETFE) ou de polyuréthane (PU).Par « majoritairement » il est entendu que le joint comprend plus de 50% du matériau indiqué.

Dans le dispositif d'étanchéité 10, la bague 18 permet d'assurer un glissement optimisé du talon 14 du joint 11 sur la quatrième paroi 9-4 qui est mobile du fait de la rotation de l'organe 6 ; de sorte que les lèvres 12 et 13 du joint 11 ne glissent pas ou peu et donc ne s'usent pas ou peu.

Le dispositif d'étanchéité 10 permet d'assurer une meilleure résistance à des pressions et/ou à des températures relativement élevées ; tandis que la bague 18, qui est solidaire du joint 11 et qui permet d'assurer de faibles efforts de friction, est protégée par le joint 11.

Le premier matériau prédéterminé présente des propriétés mécaniques qui lui permettent de résister mécaniquement à la fois à la pression, à la température et aux sollicitations dynamiques ; tandis que le second matériau prédéterminé présente des propriétés mécaniques qui lui permettent de résister mécaniquement essentiellement aux sollicitations dynamiques.

Le premier matériau prédéterminé présente en outre des propriétés mécaniques différentes du second matériau prédéterminé en ce que ce dernier est plus souple et/ou moins dur que le premier matériau prédéterminé.

La combinaison visant d'une part, à assujettir solidairement la bague 18 avec le joint 11 et d'autre part, à avoir la bague 18 qui présente un coefficient de frottement inférieur au joint 11 et donc qui résiste mieux que le joint 11 notamment aux efforts de friction subis, permet ainsi de fournir un dispositif 10 dont la pression de service et/ou la température de service peuvent être étendues, dont le couple de friction généré entre les organes fixe 5 et mobile 6 et le dispositif 10 peut être optimisé, tout en limitant son usure prématurée et par conséquence en augmentant sa durée de vie.

Ainsi qu'indiqué plus haut, le joint est annulaire et présente ainsi un axe de révolution. Suivant l'orientation de l'axe de révolution par rapport aux lèvres, il s'agit d'un joint dit facial ou radial lorsque l'axe de révolution est sensiblement perpendiculaire aux lèvres (comme dans l'exemple illustré), ou bien d'un joint dit piston lorsque l'axe de révolution est sensiblement parallèle aux lèvres.

On a vu que dans un joint radial, les lèvres agissent sur le même organe, mobile mais possiblement fixe tandis que le talon agit ici via la bague sur l'autre organe. Par ailleurs, on a vu que l'utilisation d'un joint radial nécessite un fluide de pressurisation.

Dans des variantes non illustrées :
- les lèvres s'étendent chacune depuis le talon sensiblement dans la direction radiale du joint de sorte que le joint présente, en section, une forme générale en U ; et/ou
- seul le fluide principal chemine dans les cavités.

On rappelle plus généralement que l'invention ne se limite pas aux exemples décrits et représentés.

## Revendications

1. Dispositif d'étanchéité dynamique (10) configuré pour assurer l'étanchéité entre au moins une première pièce et au moins une deuxième pièce ayant un mouvement relatif de rotation par rapport à la première pièce, le dispositif comportant :
un joint (11) pourvu d'une première lèvre (12) et d'une deuxième lèvre (13) s'étendant depuis un talon (14), la première lèvre (12) étant en regard de la deuxième lèvre (13), le joint (11) étant formé d'un premier matériau prédéterminé présentant un premier coefficient de frottement, et
une bague (18) formée d'un second matériau prédéterminé différent du premier matériau prédéterminé et présentant un second coefficient de frottement différent du premier coefficient de frottement ;
le dispositif étant **caractérisé en ce que** la bague (18) est assujettie solidairement avec le joint (11) au niveau du talon (14) et **en ce que** le premier coefficient de frottement du premier matériau prédéterminé formant le joint (11) est supérieur au second coefficient de frottement du second matériau prédéterminé formant la bague (18).

2. Dispositif selon la revendication 1, dans lequel le premier matériau prédéterminé est majoritairement réalisé en polyétheréthercétone (PEEK) et le second matériau prédéterminé est majoritairement réalisé en un matériau choisi parmi le polytétrafluoroéthylène (PTFE), le perfluoroalkoxy alkane (PFA), le polychlorotrifluoroéthylène (PCTFE), l'éthylène tétrafluoroéthylène (ETFE), et le polyuréthane (PU).

3. Dispositif selon l'une des revendications 1 et 2, dans lequel le joint (11) est annulaire et les première et deuxième lèvres (12, 13) s'étendent chacune depuis le talon (14) dans une direction respective qui est inclinée par rapport à une direction radiale du joint (11).

4. Dispositif selon la revendication 3, dans lequel le talon (14) et les première et deuxième lèvres (12, 13) sont configurés de sorte que le joint (11) présente, en section, une forme générale en U ou en V.

5. Dispositif selon l'une des revendications 1 à 4, dans lequel les première et deuxième lèvres (12 ,13) définissent entre elles une cavité du joint (11) et sont en outre chacune pourvues d'un retour dirigé vers la cavité.

6. Dispositif selon la revendication 5, comportant en outre un ressort de précontrainte (17) logé dans la cavité du joint.

7. Dispositif l'une des revendications 1 à 6, dans lequel la bague (18) est configurée de sorte à recouvrir entre environ 10% et environ 95% d'une face interne (15) du joint (11).

8. Dispositif selon l'une des revendications 1 à 7, dans lequel la bague (18) est logée à demeure dans le joint (11).

9. Dispositif selon la revendication 8, dans lequel la bague (18) est logée dans un renfoncement (19) ménagé dans le talon (14) à l'opposé des première et deuxième lèvres (12, 13).

10. Mécanisme d'assujettissement (4) d'au moins une première pièce avec au moins une deuxième pièce ayant un mouvement relatif de rotation par rapport à la première pièce, comportant un premier organe (5) configuré pour être raccordée à la première pièce, un deuxième organe (6) mobile par rapport au premier organe (5) et configuré pour être raccordée à la deuxième pièce, le premier organe (5) et le deuxième organe (6) étant raccordés l'un avec l'autre pour le transfert d'un fluide depuis l'une des première et deuxième pièces vers l'autre des première et deuxième pièces, ainsi qu'au moins un dispositif d'étanchéité (10) selon l'une des revendications 1 à 9 disposé dans au moins une gorge (9) ménagée dans le mécanisme au niveau d'une jonction entre le premier organe (5) et le deuxième organe (6).

11. Mécanisme selon la revendication 10, dans lequel le premier organe (5) fait partie d'une tourelle d'amarrage (3) d'une unité flottante (1) de production et le deuxième organe (6) fait partie d'une plateforme s'étendant depuis un navire (2) amarré à la tourelle d'amarrage.
